# FASCICULE DE BREVET EUROPEEN

(11) **EP 3 437 940 B1**
(45) Date de publication et mention de la délivrance du brevet: **16.06.2021**
(21) Numéro de dépôt: 18181598.6
(22) Date de dépôt: 04.07.2018
(51) Int. Cl.: B60S 1/40

(54) **ADAPTATEUR POUR UN ESSUIE-GLACE DE VÉHICULE AUTOMOBILE, ET ENSEMBLE COMPORTANT UN TEL ADAPTATEUR**
ADAPTER FÜR EINEN SCHEIBENWISCHER EINES KRAFTFAHRZEUGS, UND EINHEIT, DIE EINEN SOLCHEN ADAPTER UMFASST
ADAPTER FOR A MOTOR VEHICLE WINDSCREEN WIPER AND ASSEMBLY COMPRISING SUCH AN ADAPTER

(30) Priorité: 31.07.2017 FR 1757281
(43) Date de publication de la demande: 06.02.2019
(73) Titulaire: Valeo Systèmes d'Essuyage, 78322 Le Mesnil Saint Denis (FR)
(72) Inventeur: MONEYRON, Patrick, 63500 ISSOIRE (FR); ESPINASSE, Philippe, 63500 ISSOIRE (FR); TERRASSE, William, 63500 ISSOIRE (FR)
(74) Mandataire: Valeo Visibility

(56) Documents cités:
- EP-A1- 1 403 156
- DE-A1- 10 257 988
- DE-A1-102011 053 088
- US-B2- 7 690 074

## Description

### DOMAINE TECHNIQUE DE L'INVENTION

L'invention concerne notamment un adaptateur pour un essuie-glace, en particulier de véhicule automobile.

L'invention concerne encore un ensemble comportant un bras d'essuie-glace et un adaptateur selon l'invention.

L'invention concerne également un ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'invention.

### ARRIERE PLAN TECHNIQUE DE L'INVENTION

Un véhicule automobile est classiquement équipé d'essuie-glaces, notamment pour assurer un essuyage de la surface extérieure du pare-brise et éviter ainsi que la vision qu'a le conducteur de son environnement ne soit perturbé.

Un essuie-glace comprend en général un bras d'entraînement, effectuant un mouvement de va-et-vient, notamment angulaire, et un balai d'essuie-glace allongé longitudinalement qui porte une lame d'essuyage ou lame racleuse réalisée en une matière élastique telle que du caoutchouc ou un matériau élastomère.

La lame d'essuyage frotte contre la surface extérieure du pare-brise et évacue l'eau en l'amenant en dehors du champ de vision du conducteur.

Dans une version classique, le balai d'essuie-glace est réalisé sous la forme d'étriers articulés qui tiennent la lame racleuse d'essuyage en plusieurs endroits discrets répartis longitudinalement en lui conférant un cintrage lui permettant d'épouser la courbure ou galbe du pare-brise.

Dans une version plus récente dénommée "flat blade" (pour "lame plate"), le balai d'essuie-glace est réalisé sous la forme d'un ensemble semi-rigide qui maintient la lame d'essuyage sur toute sa longueur grâce à une ou des vertèbres de cintrage permettant d'appliquer le balai et la lame d'essuyage sur le pare-brise sans avoir à utiliser d'étriers.

Dans les deux conceptions, le balai d'essuie-glace est relié au bras d'entraînement par un système de connexion comportant un connecteur et un adaptateur complémentaires.

Le connecteur est une pièce qui est solidarisée au balai d'essuie-glace, tandis que l'adaptateur est solidaire du bras d'entraînement.

L'adaptateur est une pièce intermédiaire qui permet la liaison et la fixation du connecteur sur le bras d'entraînement. Il est en général conformé pour être engagé dans une tête ou pièce terminale en forme de chape et à section transversale en U renversé du bras d'entraînement.

Chacun de ces deux composants (connecteur et adaptateur) comporte des moyens d'articulation conçus pour coopérer avec des moyens complémentaires de l'autre composant, pour définir au moins un axe transversal d'articulation des deux composants l'un par rapport à l'autre, qui est aussi l'axe d'articulation du balai d'essuie-glace par rapport au bras d'entraînement.

Selon une technique connue, l'un des composants, tel que le connecteur, comprend en général un axe physique sensiblement cylindrique qui définit l'axe d'articulation et qui est reçu dans un logement de forme complémentaire de l'autre composant.

L'adaptateur comporte en général un corps allongé qui est conformé pour être engagé dans la pièce terminale d'extrémité libre avant du bras d'entraînement de façon que ce corps s'étende au moins en partie entre deux parois latérales sensiblement parallèles de cette pièce terminale.

Un adaptateur permet d'associer un balai d'essuie-glace à un type particulier de pièce terminale. Dans le cas des pièces terminales précitées à section en U renversé, il en existe plusieurs variétés avec différentes conceptions de moyens de verrouillage de la chape sur l'adaptateur.

On connaît un bras d'essuie-glace dont la pièce terminale est une chape à section en U renversé qui comporte une paire d'ergots avant de verrouillage qui sont aptes à coopérer avec des crans associés de l'adaptateur pour fixer et verrouiller de manière démontable la chape sur l'adaptateur, ce dernier comportant des moyens arrière de verrouillage aptes à coopérer avec des moyens associés de la chape, tels que par exemple une paire d'ergots arrière de verrouillage.

Un exemple d'une conception d'adaptateur adapté à ce type de chape est par exemple illustré dans le document US-B-7.690.074.

L'invention propose un adaptateur perfectionné de ce type qui soit simple, efficace et économique, et particulièrement aisé à monter et à verrouiller dans la chape, tout en assurant une liaison fiable entre ces deux composants après montage.

### BREF RESUME DE L'INVENTION

L'invention propose un adaptateur pour un essuie-glace, notamment de véhicule automobile, comportant un corps de forme allongé longitudinalement qui est délimité par deux faces latérales externes longitudinales et verticales et qui est conformé pour être monté dans une chape complémentaire à section en U renversé appartenant à un bras d'essuie-glace, cette chape comportant une paire d'ergots avant de verrouillage qui sont aptes à coopérer avec des parties associées de l'adaptateur pour fixer de manière démontable la chape sur l'adaptateur,
chacune des faces latérales externes du corps de l'adaptateur comportant un cran avant de verrouillage dont chacun est apte à recevoir un ergot avant de verrouillage associé de la chape,
et le corps de l'adaptateur comportant des moyens arrière de verrouillage apte à coopérer avec des moyens associés de la chape, lesdits moyens arrière de verrouillage de l'adaptateur comportant au moins un cran arrière de verrouillage qui est agencé à une extrémité d'une branche élastique de l'adaptateur, caractérisé en ce que le cran arrière présente une forme en C couché horizontalement et ouvert transversalement vers l'extérieur.

Selon d'autres caractéristiques de l'adaptateur :
- la branche élastique s'étend longitudinalement ;
- le cran de verrouillage arrière est agencé à proximité d'une face transversale arrière du corps ;
- la branche élastique s'étend longitudinalement d'arrière en avant, et le cran de verrouillage arrière est agencé à l'extrémité longitudinale avant de la branche élastique ;
- la branche élastique est conçue pour se déformer élastiquement dans un plan horizontal orthogonal aux faces latérales ;
- la branche élastique est apte à pivoter autour d'un axe géométrique vertical agencé au voisinage de l'extrémité longitudinale arrière de la branche élastique ;
- la branche élastique s'étend longitudinalement d'arrière en avant et l'extrémité longitudinale arrière de la branche élastique est reliée à une poutre de liaison qui s'étend longitudinalement depuis une face transversale arrière du corps de l'adaptateur ;
- le cran arrière de verrouillage comporte une surface de butée d'orientation transversale apte à coopérer avec une surface en vis-à-vis de la chape pour immobiliser longitudinalement dans un sens l'adaptateur par rapport à la chape ;
- la surface de butée s'étend dans un plan vertical ;
- la branche élastique comporte une surface de commande de déverrouillage ;
- l'adaptateur présente une symétrie générale de conception par rapport à un plan longitudinal et vertical médian ;
- le corps de l'adaptateur comporte un doigt avant porté par une face transversale avant du corps de l'adaptateur

L'invention propose aussi un ensemble comportant un bras d'essuie-glace et un adaptateur selon l'invention, caractérisé en en ce que la chape du bras d'essuie-glace comporte une paire d'ergots avant de verrouillage, et une paire d'ergots arrière de verrouillage, et en ce que au moins un ergot arrière de verrouillage est apte à coopérer avec ce au moins un cran arrière de verrouillage de l'adaptateur pour fixer de manière démontable la chape sur l'adaptateur.

La chape comporte une paroi transversale d'extrémité avant d'orientation verticale qui comporte un évidement, et le corps de l'adaptateur comporte un doigt avant qui, en position montée et verrouillée de la chape sur l'adaptateur, s'étend longitudinalement vers l'avant à travers l'évidement.

L'invention propose aussi un ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'invention, le connecteur et l'adaptateur étant reliés l'un à l'autre par des moyens d'articulation.

### BREVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
- la figure 1 est une vue schématique en perspective d'un essuie-glace comportant un balai d'essuie-glace et un bras d'entraînement relié l'un à l'autre par un système de connexion comprenant un connecteur et un adaptateur, le bras d'entraînement comportant une tige et une chape d'extrémité ;
- la figure 2 est une vue à grande échelle en perspective qui illustre le connecteur solidarisé directement sur le balai d'essuie-glace ;
- la figure 3 est une vue analogue à celle de la figure 2 qui illustre l'adaptateur en position montée sur le connecteur ;
- la figure 4 est une vue analogue à celle de la figure 3 qui illustre la chape d'extrémité en position montée et verrouillée sur l'adaptateur selon l'invention ;
- la figure 5 est une vue en perspective de dessous qui illustre à grande échelle la chape d'extrémité en position montée et verrouillée sur l'adaptateur selon l'invention ;
- la figure 6 est vue en section par un plan longitudinal et vertical médian de l'ensemble illustré à la figure 5 ;
- la figure 7 est une vue en coupe analogue à celle de la figure 6 selon un autre plan longitudinal et vertical passant par les ergots avant et arrière de verrouillage de la chape d'extrémité ;
- la figure 8 est vue de l'ensemble illustré à la figure 5, en section par un plan transversal et vertical passant par les ergots avant de verrouillage de la chape d'extrémité;
- la figure 9 est vue de l'ensemble illustré à la figure 5, en section par un plan transversal et vertical passant par les ergots arrière de verrouillage de la chape d'extrémité ;

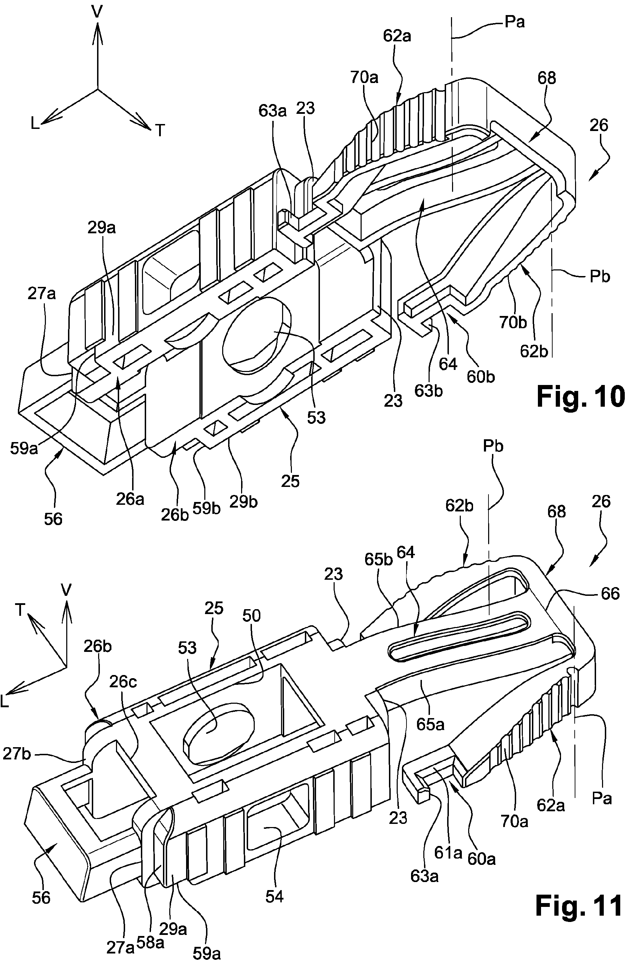

- les figures 10 et 11 sont deux vues à grande échelle de l'adaptateur selon l'invention qui est illustré en perspective selon deux angles différents de vue ;
- la figure 12 est une vue latérale à grande échelle de l'adaptateur selon l'invention ;
- la figure 13 est une vue à grande échelle et en perspective de dessous de la chape d'extrémité du bras d'essuie-glace ; et
- les figures 14 et 15 sont des vues analogues à celles des figures 11 et 12 qui illustrent une variante de réalisation d'un adaptateur selon l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" sur les figures. On définit aussi un plan horizontal qui s'étend longitudinalement et transversalement. Ainsi, dans la description, les dénominations longitudinales, verticales ou transversales se réfèrent à l'orientation du balai d'essuie-glace ou du bras d'entraînement.

La direction longitudinale correspond à l'axe principal du balai d'essuie-glace ou du bras d'entraînement dans lequel il s'étend d'arrière en avant selon l'orientation de l'axe L du trièdre L, V, T.

Les orientations latérales correspondent quant à elle à des droites concourantes, c'est-à-dire qui croisent la direction longitudinale, notamment en étant perpendiculaires à l'axe longitudinal du balai d'essuie-glace ou du bras d'entraînement.

Les dénominations arrière ou avant s'apprécient par rapport au point de fixation du balai sur le bras, la dénomination arrière correspondant à la partie où le bras et un demi-balai s'étendent, ou par rapport au point de fixation du bras au véhicule.

Les dénominations interne, externe, intérieure ou extérieure peuvent faire référence à une pièce dans sa globalité, et concernent par exemple l'intérieur ou l'extérieur de cette pièce.

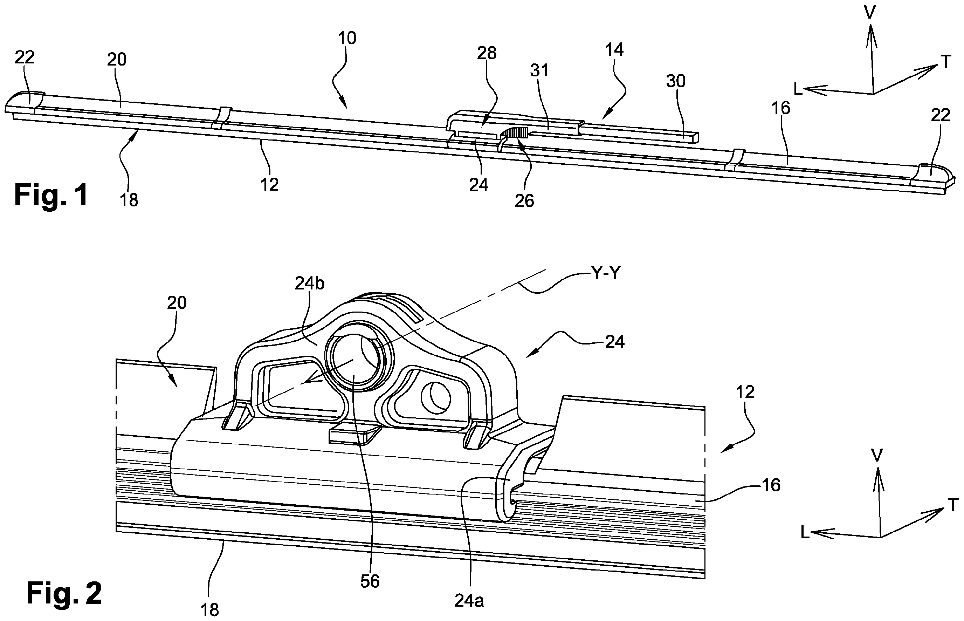

On a représenté à la figure 1, un essuie-glace 10 comportant notamment un balai d'essuie-glace 12 et un bras 14 d'entraînement (aussi appelé bras d'essuie-glace) du balai d'essuie-glace 12.

Le balai 12 est ici du type "flat blade" et comprend un corps longitudinal 16, une lame d'essuyage 18, en général en caoutchouc ou en matériau élastomère, et au moins une vertèbre (non représentée) qui rigidifie la lame et favorise son application sur la surface extérieure d'une vitre du véhicule telle que par exemple un pare-brise galbé (non représenté) du véhicule.

Le corps longitudinal 16 du balai d'essuie-glace 12 comporte un déflecteur aérodynamique supérieur 20 destiné à améliorer le fonctionnement du système d'essuyage, ce déflecteur ayant pour fonction d'améliorer l'application du balai d'essuie-glace 12 sur le pare-brise, et donc d'améliorer la performance aérodynamique de l'essuie-glace 10.

Le balai d'essuie-glace 12 comporte en outre des embouts d'extrémité 22, ou agrafes d'accrochage, de la lame 18 et de la vertèbre sur le corps longitudinal 16, ces embouts 22 étant situés à chacune des deux extrémités longitudinales opposées avant et arrière du corps longitudinal 16.

Le bras d'entraînement 14 est destiné à être entraîné par un moteur pour suivre un mouvement de va-et-vient, et par exemple un mouvement alterné angulaire, permettant à la lame d'essuyage 18 d'évacuer l'eau et éventuellement d'autres éléments indésirables recouvrant la surface extérieure du pare-brise.

Sensiblement à mi longueur, le balai d'essuie-glace 12 comprend un ensemble de connexion comportant un connecteur 24 intermédiaire et un adaptateur 26.

L'adaptateur 26 est ici une pièce réalisée par moulage en une seule pièce et il présente une symétrie de conception par rapport à un plan longitudinal et vertical médian. De préférence, l'adaptateur selon l'invention est réalisé en matière plastique.

L'adaptateur 26 solidaire du bras 14 est monté sur le connecteur 24 de façon à permettre un degré de liberté en rotation autour d'un axe transversal d'articulation Y-Y qui est sensiblement perpendiculaire à l'axe longitudinal du balai d'essuie-glace 12.

Ce degré de liberté permet une rotation dans les deux sens du balai d'essuie-glace 12 par rapport au bras d'entraînement 14 et permet ainsi au balai d'essuie-glace 12, lors de ses déplacements, de suivre la courbure ou galbe du pare-brise.

L'adaptateur 26 assure la liaison du balai d'essuie-glace 12 au bras d'entraînement 14 et en particulier avec une tête ou pièce terminale d'extrémité longitudinale avant du bras d'entraînement 14 qui peut être formée d'une seule pièce avec le bras d'entraînement, ou bien être rapportée et fixée sur celui-ci.

Aux figures, la pièce terminale du bras d'entraînement est un tronçon d'extrémité libre avant en forme d'une chape 28 à section transversale sensiblement en U renversé.

A titre d'exemple non limitatif, la chape 28 a une forme allongée qui s'étend selon un axe longitudinal qui est en général sensiblement parallèle à l'axe général longitudinal du balai d'essuie-glace 12.

La chape 28 comprend une partie arrière 31 de liaison au reste du bras d'entraînement 14, qui comporte ici une tige de bras 30 auquel la chape 28 est par exemple fixée par sertissage.

En section par un plan vertical et transversale, la chape 28 a une section sensiblement en forme de U renversé.

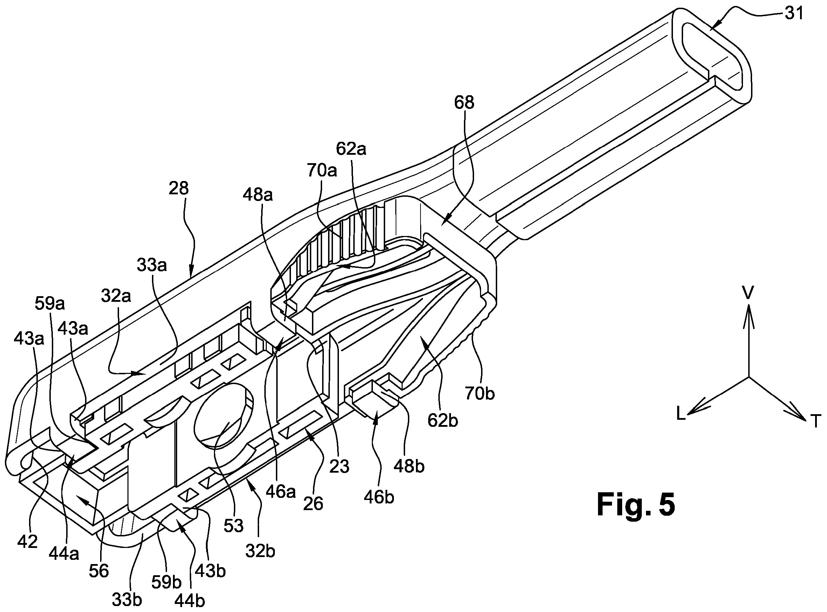

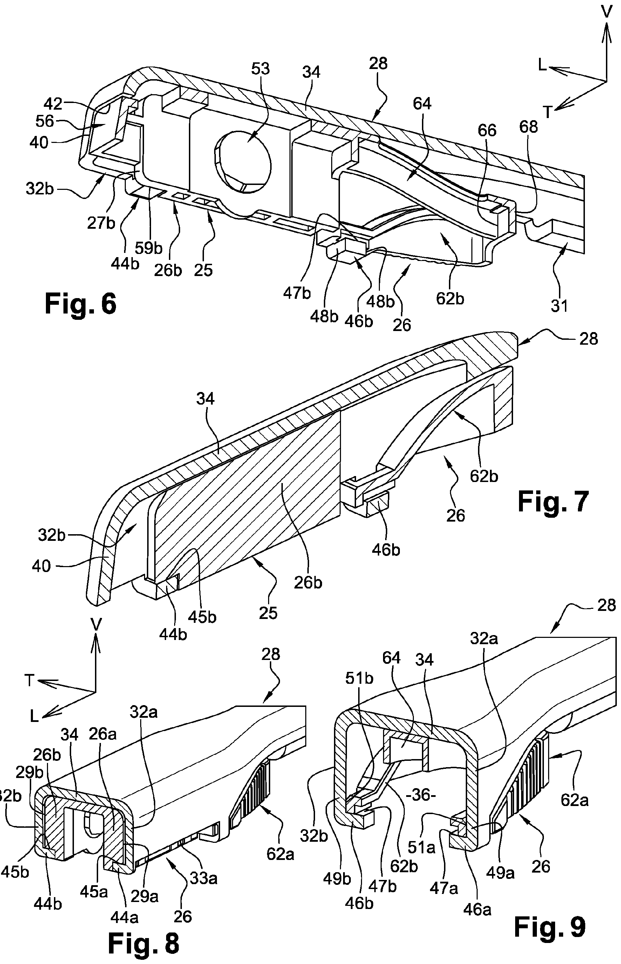

Comme illustré en détails aux figures 5, 6 et 13, la chape 28 comprend deux parois latérales verticales d'orientation longitudinale 32a, 32b dont les bords longitudinaux supérieurs sont reliés entre eux par une paroi transversale supérieure d'orientation longitudinale 34. Les parois 32a, 32b et 34 délimitent entre elles un espace intérieur 36 de logement de l'adaptateur 26.

A leur extrémité avant, les parois latérales 32a, 32b sont reliées entre elles par une paroi transversale verticale avant 40 qui comporte un évidement central 42 de contour rectangulaire qui débouche verticalement vers le bas dans le bord transversal inférieur de la paroi avant 40.

Les parois latérales 32a, 32b sont délimitées verticalement vers le bas par des bords longitudinaux inférieurs 33a, 33b.

Chaque bord longitudinal inférieur 33a, 33b comporte, au voisinage de son extrémité avant, un ergot avant de verrouillage 44a, 44b et, au voisinage de son extrémité arrière, un ergot arrière de verrouillage 46a, 46b.

Les ergots avant forment une paire d'ergots avant de verrouillage 44a, 44b qui sont alignés longitudinalement, et les ergots arrière forment une paire d'ergots arrière de verrouillage 46a, 46b qui sont alignés longitudinalement.

Chaque ergot avant de verrouillage 44a, 44b, se présente sous la forme d'une patte horizontale de verrouillage qui s'étend transversalement vers l'intérieur et qui est délimitée par une face horizontale supérieure 45a, 45b, respectivement.

Chaque patte horizontale de verrouillage 44a, 44b, est aussi délimitée par une paire de faces transversales et verticales 43a, 43b.

Chaque ergot arrière de verrouillage 46a, 46b, comporte une patte horizontale de verrouillage qui s'étend transversalement vers l'intérieur et qui est délimitée par une face horizontale supérieure 47a, 47b, respectivement. Chaque patte horizontale de verrouillage 46a, 46b, est aussi délimitée par une paire de faces transversales et verticales 48a, 48b.

Chaque patte horizontale arrière de verrouillage 46a, 46b est reliée au bord longitudinal inférieur associé 33a, 33b par une patte verticale de verrouillage 49a, 49b.

Chaque patte verticale de verrouillage 49a, 49b est délimitée latéralement par une face longitudinale et verticale externe 51a, 51b.

L'adaptateur 26, comporte un corps principal allongé 25 qui est conformé pour être monté dans l'espace interne 36 de la chape 28.

En section par un plan vertical transversal, l'adaptateur a une forme sensiblement en U renversé. Il comporte deux parois latérales 26a, 26b verticales et longitudinales qui sont délimitées longitudinalement vers l'avant par un bord vertical 27a, 27b respectivement d'extrémité longitudinale avant.

Les deux parois latérales 26a, 26b sont reliées ensemble par une paroi supérieure horizontale 26c qui comprend ici un évidemment central 50 de contour rectangulaire allongé.

Chaque paroi latérale 26a, 26b est délimitée par une face latérale externe 29a, 29b d'orientation longitudinale et verticale.

Le corps 25 de l'adaptateur 26 est aussi délimité longitudinalement vers l'arrière par une face transversale et verticale arrière 23 qui est évidée centralement et qui présente une forme générale de U renversé.

Les parois latérales 26a, 26b comprennent respectivement un orifice 54 et un tourillon 53 alignés transversalement. Ces éléments 53 et 54 sont situés longitudinalement sensiblement au milieu des parois latérales 26a, 26b de l'adaptateur 26.

Les éléments 53 et 54 définissent l'axe Y-Y sensiblement transversal d'articulation en rotation du connecteur 24 par rapport à l'adaptateur 26, et donc du balai d'essuie-glace 12 par rapport au bras d'entraînement 14.

Le connecteur 24 comprend essentiellement, une partie inférieure 24a de sertissage ou de fixation sur le balai d'essuie-glace 12, et une partie supérieure 24b destinée à être logée entre les faces internes des parois latérales 26a, 26b de l'adaptateur 26.

La partie supérieure 24b comporte des moyens 56 complémentaires des éléments 53 et 54 destinés à être alignés avec l'axe Y-Y.

En variante non représentée, l'un des composants parmi l'adaptateur 26 et le connecteur 24 peut comporter des tourillons cylindriques centrés sur l'axe Y-Y et destinés à être engagés par encliquetage élastique dans un orifice ou des orifices complémentaires de l'autre de ces composants.

A son extrémité longitudinale avant, le corps 25 de l'adaptateur 26 comporte ici un doigt 56 d'extrémité avant qui s'étend longitudinalement vers l'avant dans le prolongement du corps 25 de l'adaptateur 26. Le doigt 56 est ainsi, de préférence, porté par chaque bord vertical 27a, 27b d'extrémité longitudinale avant.

Les dimensions et le contour du doigt avant 56 sont complémentaires de ceux de l'évidement 42 dans lequel il est reçu lorsque la chape 28 est en position montée et verrouillée sur l'adaptateur 26. En position montée, la surface externe de la paroi longitudinale avant du doigt 56 est affleurante avec la surface externe de la paroi transversale verticale avant 40

Pour recevoir un ergot avant de verrouillage associé 44a, 44b - au voisinage de son extrémité avant - chaque paroi latérale 26a, 26b comporte une rainure avant 58a, 58b en "L" qui comporte un tronçon inférieur horizontal 59a, 59b qui est ouvert vers l'avant.

Chaque ergot avant de verrouillage 44a, 44b peut être introduit verticalement de haut en bas dans la rainure associée 58a, 58b puis glissé longitudinalement vers l'arrière dans le tronçon inférieur 59a, 59b formant cran avant de verrouillage pour réaliser un montage et verrouillage du type "à baïonnette".

Cette position engagée des ergots avant de verrouillage 44a, 44b dans leurs crans de verrouillage 59a, 59b est illustrée en détails aux figures 5 à 8.

On décrira maintenant les moyens arrière de verrouillage de l'adaptateur 26 aptes à coopérer avec les ergots arrière 46a, 46b de verrouillage de la chape 28.

Ces moyens arrière de verrouillage de l'adaptateur 26 comportent au moins un cran arrière 60a, 60b de verrouillage qui est agencé à une extrémité d'une branche élastique associée 62a, 62b de l'adaptateur 26.

A partir de sa face transversale arrière 23, le corps 25 de l'adaptateur 26 se prolonge longitudinalement vers l'arrière par une poutre centrale rigide et évidée 64. Cet évidemment est débouchant sur la face supérieure de la poutre 64. Ainsi la poutre 64 comprend deux branches 65a, 65b s'étendant parallèlement.

A son extrémité longitudinale arrière 66, la poutre centrale 64 est reliée à une traverse arrière 68 comportant deux tronçons transversalement opposés.

A partir de chacun de ces tronçons, s'étend, longitudinalement d'arrière en avant, la branche élastique 62a, 62b dont l'extrémité longitudinale arrière est ainsi reliée à la poutre centrale 64.

L'extrémité libre avant de la branche élastique 62a, 62b porte le cran arrière de verrouillage 60a, 60b

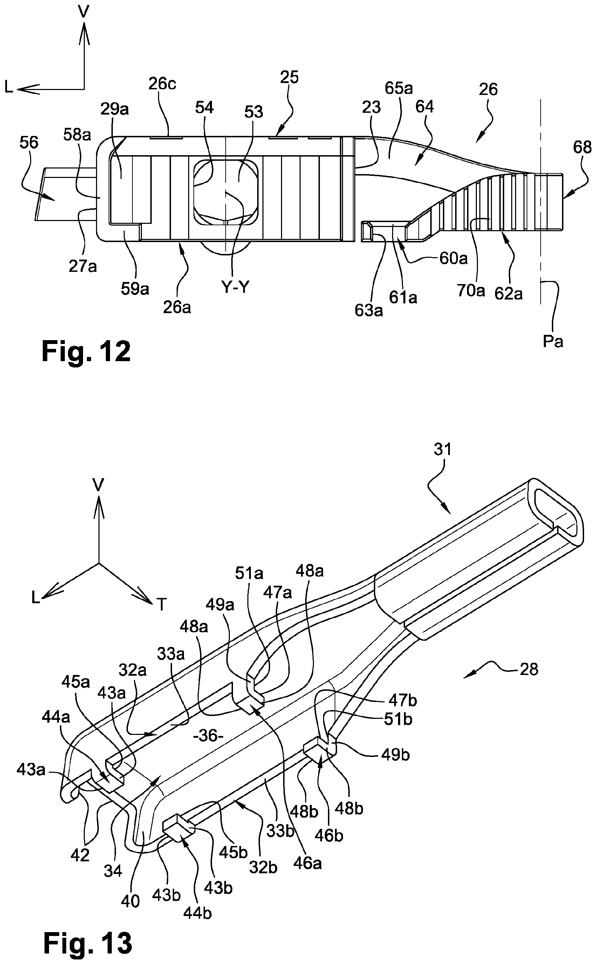

Ainsi, comme on peut le voir notamment à la figure 12, chaque cran de verrouillage arrière 60a, 60b est agencé à proximité de la face transversale arrière 23 du corps 25 de l'adaptateur 26.

Chaque cran arrière de verrouillage 60a, 60b est conformée en "C" couché horizontalement et ouvert transversalement vers l'extérieur, chaque cran est délimité par trois facettes verticales consécutives. Autrement dit, chaque cran arrière de verrouillage 60a, 60b est conformé, vu de dessus, c'est-à-dire vu depuis la chape 28 du bras d'entraînement 14 lorsque l'adaptateur 26 est agencé dans cette chape 28, en « U ».

Les dimensions internes de chaque cran arrière de verrouillage 60a, 60b sont sensiblement égales et complémentaires de celles des pattes verticales de verrouillage 49a, 49b de telle manière que, en position montée et verrouillée de la chape 28 sur l'adaptateur 26, une patte verticale de verrouillage 49a, 49b est reçue dans un cran arrière de verrouillage associé 60a, 60b comme on peut le voir notamment à la figure 5.

Le bord supérieur 61a, 61b de chaque cran arrière de verrouillage 60a, 60b présente un profil chanfreiné.

De manière à permettre l'engagement puis l'emboîtement de la patte verticale de verrouillage 49a, 49b dans son cran arrière de verrouillage associé 60a, 60b, chaque branche élastique 62a, 62b est conçue pour se déformer élastiquement dans un plan horizontal orthogonal aux faces latérales externes 29a, 29b du corps 25 de l'adaptateur 26.

A cet effet, au voisinage de son extrémité longitudinale arrière, chaque branche élastique 62a, 62b est apte à se déformer élastiquement et à pivoter autour d'un axe géométrique vertical "Pa, Pb".

Pour provoquer une telle déformation élastique, chaque branche élastique 62a, 62b comporte une surface externe rainurée 70a, 70b de commande de déverrouillage.

En agissant simultanément sur les deux surfaces rainurées de commande 70a et 70b, un utilisateur peut provoquer un rapprochement transversalement vers l'intérieur et l'une vers l'autre des deux branches de verrouillage 62a et 62b et donc des deux crans arrière de verrouillage 60a, 60b pour permettre de dégager les ergots arrière de verrouillage 46a et 46b.

En position montée et verrouillée de la chape 28 sur l'adaptateur 26, lorsque une patte verticale de verrouillage 49a, 49b est reçue dans un cran arrière de verrouillage associé 60a, 60b, la chape 28 est aussi immobilisée longitudinalement vers l'avant par rapport à l'adaptateur 26 pour éviter tout dégagement accidentel, notamment si l'ergot avant de verrouillage 44a, 44b devait sortir de son cran avant de verrouillage associé.

C'est la facette verticale et transversale 63a, 63b du cran de verrouillage arrière 60a, 60b qui constitue une surface de butée longitudinale qui coopère avec une portion de surface en vis-à-vis de la patte verticale arrière 49a, 49b.

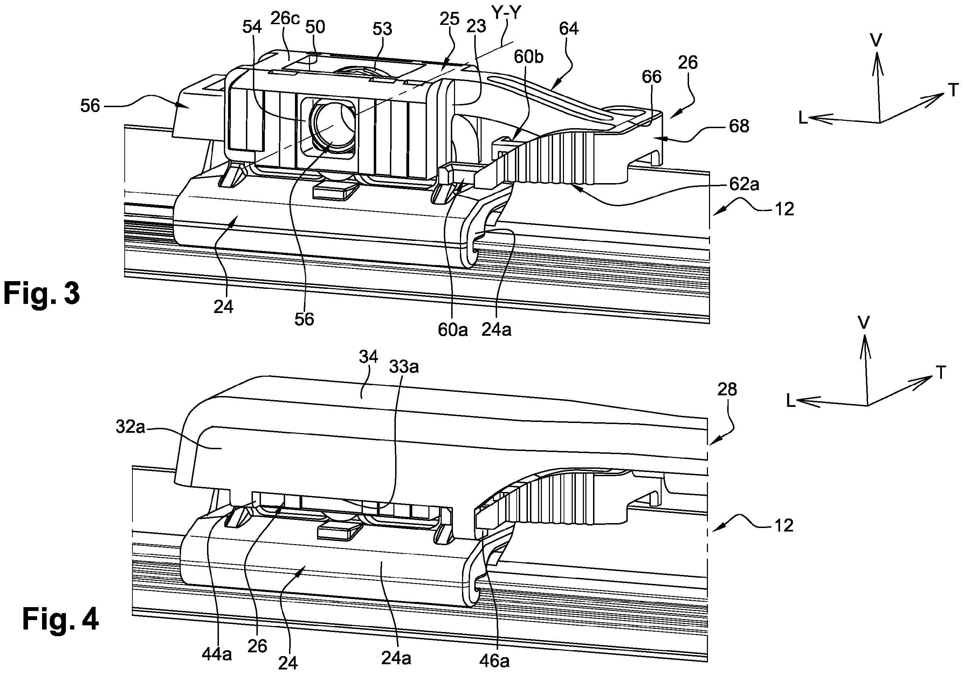

Pour monter et verrouiller l'adaptateur 26 dans la chape 28, on commence par engager les ergots avant de verrouillage 44a et 44b dans les crans avant de verrouillage 59a et 59b, puis on fait pivoter la chape 28 par rapport à l'adaptateur autour d'un axe horizontal passant sensiblement par les ergots avant de verrouillage 44a et 44b - dans le sens horaire en considérant la figure 4.

Ce pivotement provoque la venue en contact des pattes horizontales arrière 48a et 48b avec les bords chanfreinés 61a, 61b des crans arrière de verrouillage 60a, 60b. Il se produit alors une légère déformation élastique des branches élastiques 62a et 62b et un engagement par emboîtement de chaque patte verticale de verrouillage 49a, 49b dans le cran arrière associé de verrouillage 60a, 60b.

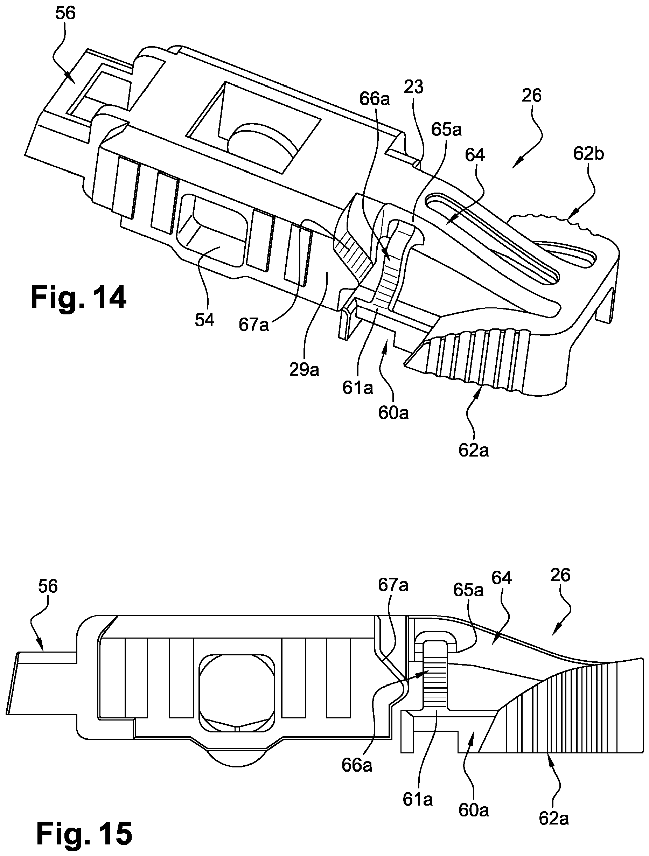

Selon la variante représentée aux figures 14 et 15, chaque bord longitudinal chanfreiné 61a, 61b est prolongé verticalement vers le haut par une rampe de guidage vertical 66a, 66b qui facilite l'action des pattes horizontales arrière 48a et 48b pour resserrer transversalement vers l'intérieur les branches élastiques 62a et 62b et faciliter l'encliquetage des pattes verticales de verrouillage 49a, 49b dans les crans arrière associés 60a, 60b.

Chaque rampe de guidage vertical 66a, 66b relie un bord longitudinal 61a, 61b à une portion alignée verticalement de la face latérale, d'orientation verticale et longitudinale, de la poutre 64.

Chaque rampe de guidage vertical 66a, 66b s'étend ainsi globalement dans un plan vertical avec un profil incliné qui converge du bas vers le haut en direction de la poutre 64.

Dans cette variante, sensiblement au niveau de la face transversale arrière 23 et à mi-hauteur du corps 25 de l'adaptateur 26, dans le prolongement de chaque face latérale externe 29a, 29b, le corps 25 comporte une rampe de guidage longitudinal 67a, 67b qui s'étend longitudinalement d'avant en arrière en étant inclinée de haut en bas.

Chaque rampe de guidage longitudinal 67a, 67b, à son extrémité libre arrière, débouche au droit d'une portion en vis-à-vis de la rampe de guidage vertical associée 66a, 66b.

Ainsi, les pattes arrière horizontales 48a, 48b viennent coopérer d'abord avec les rampes de guidage longitudinal 67a, 67b, puis avec les rampes de guidage vertical 66a, 66b, pour faciliter le montage et le verrouillage de l'adaptateur 26 dans la chape 28.

## Revendications

1. Adaptateur (26) pour un essuie-glace, notamment de véhicule automobile, comportant un corps (25) de forme allongé longitudinalement qui est délimité par deux faces latérales externes (29a, 29b) longitudinales et verticales et qui est conformé pour être monté dans une chape complémentaire (28) à section en U renversé appartenant à un bras d'essuie-glace, cette chape (28) comportant une paire d'ergots avant (44a, 44b) de verrouillage qui sont aptes à coopérer avec des parties associées de l'adaptateur pour fixer de manière démontable la chape (28) sur l'adaptateur (26),
chacune des faces latérales externes (29a, 29b) du corps (25) de l'adaptateur (26) comportant un cran avant (59a, 59b) de verrouillage dont chacun est apte à recevoir un ergot avant (44a, 44b) de verrouillage associé de la chape (28),
et le corps (25) de l'adaptateur (26) comportant des moyens arrière de verrouillage apte à coopérer avec des moyens associés de la chape (28), lesdits moyens arrière de verrouillage de l'adaptateur comportant au moins un cran arrière (60a, 60b) de verrouillage qui est agencé à une extrémité d'une branche élastique (62a, 62b) de l'adaptateur, **caractérisé en ce que** le cran arrière (60a, 60b) présente une forme en C couché horizontalement et ouvert transversalement vers l'extérieur.

2. Adaptateur selon la revendication 1, **caractérisé en ce que** la branche élastique (62a, 62b) s'étend longitudinalement.

3. Adaptateur selon la revendication 1 ou 2, **caractérisé en ce que** le cran arrière de verrouillage (60a, 60b) est agencé à proximité d'une face transversale arrière (23) du corps (25) de l'adaptateur (26).

4. Adaptateur selon l'une quelconque des revendications 1 à 3, **caractérisé en ce que** la branche élastique (62a, 62b) s'étend longitudinalement d'arrière en avant, et **en ce que** le cran arrière de verrouillage (60a, 60b) est agencé à l'extrémité longitudinale avant de la branche élastique (62a, 62b).

5. Adaptateur selon l'une quelconque des revendications 1 à 4, **caractérisé en ce que** la branche élastique (62a, 62b) est conçue pour se déformer élastiquement dans un plan horizontal orthogonal auxdites faces latérales (29a, 29b).

6. Adaptateur selon la revendication 5 prise en combinaison avec la revendication 4, **caractérisé en ce que** la branche élastique (62a, 62b) est apte à pivoter autour d'un axe géométrique vertical (Pa, Pb) agencé au voisinage de l'extrémité longitudinale arrière de la branche élastique (62a, 62b).

7. Adaptateur selon l'une quelconque des revendications 1 à 6, **caractérisé en ce que** la branche élastique (62a, 62b) s'étend longitudinalement d'arrière en avant et **en ce que** l'extrémité longitudinale arrière de la branche élastique (62a, 62b) est reliée à une poutre de liaison (64) qui s'étend longitudinalement depuis une face transversale arrière (23) du corps (25) de l'adaptateur (26).

8. Adaptateur selon l'une quelconque des revendications 1 à 7, **caractérisé en ce que** le cran arrière de verrouillage (60a, 60b) comporte une surface de butée d'orientation transversale (63a, 63b) apte à coopérer avec une surface en vis-à-vis de la chape (28) pour immobiliser longitudinalement dans un sens l'adaptateur (26) par rapport à la chape (28).

9. Adaptateur selon la revendication 8, **caractérisé en ce que** la surface de butée (63a, 63b) s'étend dans un plan vertical.

10. Adaptateur selon selon l'une quelconque des revendications 1 à 9, **caractérisé en ce que** la branche élastique (62a, 62b) comporte une surface (70a, 70b) de commande de déverrouillage.

11. Adaptateur selon l'une quelconque des revendications précédentes, **caractérisé en ce qu'**il présente une symétrie générale de conception par rapport à un plan longitudinal et vertical médian.

12. Adaptateur selon l'une quelconque des revendications précédentes, **caractérisé en ce que** le corps (25) de l'adaptateur (26) comporte un doigt avant (56) porté par une face transversale avant du corps (25) de l'adaptateur (26)

13. Ensemble comportant un bras d'essuie-glace et un adaptateur (26) selon l'une quelconque des revendications précédentes, caractérisé en en ce que une chape (28) du bras d'essuie-glace comporte une paire d'ergots avant de verrouillage (44a, 44b), et une paire d'ergots arrière de verrouillage (46a, 46b), et en ce que au moins un ergot arrière de verrouillage est apte à coopérer avec ledit au moins un cran arrière de verrouillage (60a, 60b) de l'adaptateur (26) pour verrouiller de manière démontable la chape (28) sur l'adaptateur.

14. Ensemble selon la revendication 13, **caractérisé en ce que** la chape (28) comporte une paroi transversale d'extrémité avant (40) d'orientation verticale qui comporte un évidemment (42), et **en ce que** le corps (25) de l'adaptateur (26) comporte un doigt avant (56) qui, en position montée et fixée de la chape (28) sur l'adaptateur (26), s'étend longitudinalement vers l'avant à travers l'évidemment (42).

15. Ensemble comportant un balai d'essuie-glace et un système de connexion destiné à relier le balai d'essuie-glace à un bras d'entraînement, ledit système de connexion comprenant un connecteur fixé sur balai d'essuie-glace et un adaptateur selon l'une quelconque des revendications 1 à 12, le connecteur et l'adaptateur étant reliés l'un à l'autre par des moyens d'articulation.

## Patentansprüche

1. Adapter (26) für einen Scheibenwischer, insbesondere eines Kraftfahrzeugs, umfassend einen Körper (25) mit in Längsrichtung langgestreckter Form, der durch zwei in Längsrichtung verlaufende äußere vertikale Seitenflächen (29a, 29b) begrenzt ist und der so geformt ist, dass er in einem komplementären Gabelstück (28) mit einem Querschnitt in Form eines umgekehrten U, das Teil eines Scheibenwischerarms ist, montierbar ist, wobei das Gabelstück (28) ein Paar vorderer Verriegelungsnasen (44a, 44b) aufweist, die in der Lage sind, mit zugehörigen Teilen des Adapters zusammenzuwirken, um das Gabelstück (28) lösbar am Adapter (26) zu befestigen,
wobei jede der äußeren Seitenflächen (29a, 29b) des Körpers (25) des Adapters (26) eine vordere Verriegelungskerbe (59a, 59b) aufweist, die jeweils in der Lage sind, eine zugehörige vordere Verriegelungsnase (44a, 44b) des Gabelstücks (28) aufzunehmen,
und wobei der Körper (25) des Adapters (26) hintere Verriegelungsmittel aufweist, die in der Lage sind, mit zugehörigen Mitteln des Gabelstücks (28) zusammenzuwirken,
wobei die hinteren Verriegelungsmittel des Adapters zumindest eine hintere Verriegelungskerbe (60a, 60b) aufweisen, die an einem Ende eines federnden Schenkels (62a, 62b) des Adapters angeordnet ist, **dadurch gekennzeichnet, dass** die hintere Kerbe (60a, 60b) eine horizontal liegende und quer nach außen offene C-Form aufweist.

2. Adapter nach Anspruch 1, **dadurch gekennzeichnet, dass** sich der federnde Schenkel (62a, 62b) in Längsrichtung erstreckt.

3. Adapter nach Anspruch 1 oder 2, **dadurch gekennzeichnet, dass** die hintere Verriegelungskerbe (60a, 60b) in der Nähe einer hinteren Querfläche (23) des Körpers (25) des Adapters (26) angeordnet ist.

4. Adapter nach einem der Ansprüche 1 bis 3, **dadurch gekennzeichnet, dass** sich der federnde Schenkel (62a, 62b) in Längsrichtung von hinten nach vorn erstreckt und dass die hintere Verriegelungskerbe (60a, 60b) am vorderen Längsende des federnden Schenkels (62a, 62b) angeordnet ist.

5. Adapter nach einem der Ansprüche 1 bis 4, **dadurch gekennzeichnet, dass** der federnde Schenkel (62a, 62b) gestaltet ist, um sich in einer horizontalen Ebene orthogonal zu den Seitenflächen (29a, 29b) elastisch zu verformen.

6. Adapter nach Anspruch 5 in Kombination mit Anspruch 4, **dadurch gekennzeichnet, dass** der federnde Schenkel (62a, 62b) um eine vertikale geometrische Achse (Pa, Pb) schwenkbar ist, die in der Nähe des hinteren Längsendes des federnden Schenkels (62a, 62b) angeordnet ist.

7. Adapter nach einem der Ansprüche 1 bis 6, **dadurch gekennzeichnet, dass** sich der federnde Schenkel (62a, 62b) in Längsrichtung von hinten nach vorn erstreckt und dass das hintere Längsende des federnden Schenkels (62a, 62b) mit einem Verbindungsträger (64) verbunden ist, der sich in Längsrichtung von einer hinteren Querfläche (23) des Körpers (25) des Adapters (26) erstreckt.

8. Adapter nach einem der Ansprüche 1 bis 7, **dadurch gekennzeichnet, dass** die hintere Verriegelungskerbe (60a, 60b) eine quer ausgerichtete Anschlagfläche (63a, 63b) aufweist, die in der Lage ist, mit einer gegenüberliegenden Fläche des Gabelstücks (28) zusammenzuwirken, um den Adapter (26) in Längsrichtung in einer Richtung relativ zum Gabelstück (28) zu fixieren.

9. Adapter nach Anspruch 8, **dadurch gekennzeichnet, dass** sich die Anschlagfläche (63a, 63b) in einer vertikalen Ebene erstreckt.

10. Adapter nach einem der Ansprüche 1 bis 9, **dadurch gekennzeichnet, dass** der federnde Schenkel (62a, 62b) eine Fläche (70a, 70b) zur Entriegelungssteuerung aufweist.

11. Adapter nach einem der vorangehenden Ansprüche, **dadurch gekennzeichnet, dass** er eine allgemeine Konstruktionssymmetrie in Bezug auf eine in Längsrichtung und vertikal verlaufende Mittelebene aufweist.

12. Adapter nach einem der vorangehenden Ansprüche, **dadurch gekennzeichnet, dass** der Körper (25) des Adapters (26) einen vorderen Finger (56) aufweist, der von einer vorderen Querfläche des Körpers (25) des Adapters (26) getragen wird.

13. Baugruppe, umfassend einen Scheibenwischerarm und einen Adapter (26) nach einem der vorangehenden Ansprüche, **dadurch gekennzeichnet, dass** ein Gabelstück (28) des Scheibenwischerarms ein Paar vorderer Verriegelungsnasen (44a, 44b) und ein Paar hinterer Verriegelungsnasen (46a, 46b) aufweist und dass zumindest eine hintere Verriegelungsnase in der Lage ist, mit der zumindest einen hinteren Verriegelungskerbe (60a, 60b) des Adapters (26) zusammenzuwirken, um das Gabelstück (28) lösbar am Adapter zu verriegeln.

14. Baugruppe nach Anspruch 13, **dadurch gekennzeichnet, dass** das Gabelstück (28) eine vertikal ausgerichtete vordere Querendwand (40) aufweist, die eine Ausnehmung (42) aufweist, und dass der Körper (25) des Adapters (26) einen vorderen Finger (56) aufweist, der sich in montierter und gesicherter Stellung des Gabelstücks (28) am Adapter (26) in Längsrichtung nach vorn durch die Ausnehmung (42) erstreckt.

15. Baugruppe, umfassend ein Scheibenwischerblatt und ein Verbindungssystem zum Verbinden des Scheibenwischerblatts mit einem Antriebsarm, wobei das Verbindungssystem einen am Scheibenwischerblatt befestigten Verbinder und einen Adapter nach einem der Ansprüche 1 bis 12 umfasst, wobei der Verbinder und der Adapter durch Gelenkmittel miteinander verbunden sind.

## Claims

1. Adapter (26) for a windscreen wiper system, in particular of a motor vehicle, comprising a body (25) of longitudinally elongated shape which is delimited by two longitudinal and vertical external lateral faces (29a, 29b) and which is shaped so as to be mounted in a complementary cap (28) of reverse U-shaped section belonging to a windscreen wiper arm, this cap (28) comprising a pair of front locking lugs (44a, 44b) which are capable of cooperating with the associated parts of the adapter in order to fix the cap (28) to the adapter (26) in a dismantlable manner,
each of the external lateral faces (29a, 29b) of the body (25) of the adapter (26) comprising a front locking notch (59a, 59b), each thereof being capable of receiving an associated front locking lug (44a, 44b) of the cap (28),
and the body (25) of the adapter (26) comprising rear locking means capable of cooperating with associated means of the cap (28),
said rear locking means of the adapter comprise at least one rear locking notch (60a, 60b) which is arranged at one end of a resilient branch (62a, 62b) of the adapter,
**characterized in that** the rear locking notch (60a, 60b) presents a horizontally inclined C-shape and is open transversely to the outside.

2. Adapter according to Claim 1, **characterized in that** the resilient branch (62a, 62b) extends longitudinally.

3. Adapter according to Claim 1 or 2, **characterized in that** the rear locking notch (60a, 60b) is arranged in the vicinity of a rear transverse face (23) of the body (25) of the adapter (26).

4. Adapter according to any one of Claims 1 to 3, **characterized in that** the resilient branch (62a, 62b) extends longitudinally from the rear to the front, and **in that** the rear locking notch (60a, 60b) is arranged at the front longitudinal end of the resilient branch (62a, 62b).

5. Adapter according to any one of Claims 1 to 4, **characterized in that** the resilient branch (62a, 62b) is designed to be deformed resiliently in a horizontal plane at right angles to said lateral faces (29a, 29b).

6. Adapter according to Claim 5, taken in combination with Claim 4, **characterized in that** the resilient branch (62a, 62b) is capable of pivoting about a vertical geometric axis (Pa, Pb) arranged in the vicinity of the rear longitudinal end of the resilient branch (62a, 62b).

7. Adapter according to any one of Claims 1 to 6, **characterized in that** the resilient branch (62a, 62b) extends longitudinally from the rear to the front and **in that** the rear longitudinal end of the resilient branch (62a, 62b) is connected to a connecting bar (64) which extends longitudinally from a rear transverse face (23) of the body (25) of the adapter (26).

8. Adapter according to any one of Claims 1 to 7, **characterized in that** the rear locking notch (60a, 60b) comprises an abutment surface of transverse orientation (63a, 63b) which is capable of cooperating with a surface opposite the cap (28) in order to immobilize the adapter (26) relative to the cap (28) longitudinally in one direction.

9. Adapter according to Claim 8, **characterized in that** the abutment surface (63a, 63b) extends in a vertical plane.

10. Adapter according to any one of Claims 1 to 9, **characterized in that** the resilient branch (62a, 62b) comprises an unlocking control surface (70a, 70b).

11. Adapter according to any one of the preceding claims, **characterized in that** it has an overall symmetry of design relative to a median longitudinal and vertical plane.

12. Adapter according to any one of the preceding claims, **characterized in that** the body (25) of the adapter (26) comprises a front finger (56) borne by a front transverse face of the body (25) of the adapter (26).

13. Assembly comprising a windscreen wiper arm and an adapter (26) according to any one of the preceding claims, **characterized in that** a cap (28) of the windscreen wiper arm comprises a pair of front locking lugs (44a, 44b) and a pair of rear locking lugs (46a, 46b) and **in that** at least one rear locking lug is capable of cooperating with said at least one rear locking notch (60a, 60b) of the adapter (26) in order to lock the cap (28) to the adapter in a dismantlable manner.

14. Assembly according to Claim 13, **characterized in that** the cap (28) comprises a transverse wall (40) having a front end of vertical orientation which comprises a recess (42) and **in that** the body (25) of the adapter (26) comprises a front finger (56) which, in the mounted and fixed position of the cap (28) on the adapter (26), extends longitudinally to the front through the recess (42).

15. Assembly comprising a windscreen wiper and a connection system designed to connect the windscreen wiper to a drive arm, said connection system comprising a connector fixed to the windscreen wiper and an adapter according to any one of Claims 1 to 12, the connector and the adapter being connected to one another by articulation means.
